Europäisches Patentamt

European Patent Office

Office européen des brevets

(11) Publication number: **0 096 830**
**B1**

# EUROPEAN PATENT SPECIFICATION

(45) Date of publication of patent specification: 07.01.88

(51) Int. Cl.⁴: **B 25 J 9/00**, B 25 J 13/00

(21) Application number: 83105586.8

(22) Date of filing: 07.06.83

(54) Safety system for robot.

(30) Priority: 07.06.82 JP 96257/82

(43) Date of publication of application:
28.12.83 Bulletin 83/52

(45) Publication of the grant of the patent:
07.01.88 Bulletin 88/01

(84) Designated Contracting States:
DE GB SE

(56) References cited:
GB-A-1 586 017
US-A-4 136 957
US-A-4 146 924
US-A-4 187 051
US-A-4 236 794
US-A-4 316 657

(73) Proprietor: HITACHI, LTD.
6, Kanda Surugadai 4-chome Chiyoda-ku
Tokyo 100 (JP)

(72) Inventor: Tsuchihashi, Akira
5-34-11, Heiwadai
Nagareyama-shi Chiba-ken (JP)

(74) Representative: Patentanwälte Beetz sen. -
Beetz jun. Timpe - Siegfried - Schmitt-Fumian
Steinsdorfstrasse 10
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Field of the Invention

The present invention relates to a safety system for preventing any accident which may occur during operation of a robot.

Description of the Prior Art

Nowadays, industrial robots can well simulate the motion of human hands and, hence, have acquired a stable position as excellent workers in place of human labourers, particularly in the fields of automation which could never be achieved by conventional machine technology, as well as in the simple and monotonous works and works under severe condition which could not be sustained by human labourers. In fact, many robots are actually used in various production lines.

Most of industrial robots are adapted to operate in accordance with a predetermined sequence or to play back a motion following up the content of teaching. Once the playing back operation is started by, for example, the setting of the object to be worked (referred to as "work", hereinunder), the operation of the manipulator is successively performed until a series of steps in accordance with the content of teaching is completed.

The industrial robots, therefore, suffered from a possibility of accident due to contact between the movable part or tool on the robot and a person or any obstacle which may accidentally come into the area of reach of the robot during the playback operation or automatic operation of the robot. The accident may be caused also by a wrong contact between the tool and the work when the work is set in a wrong manner.

In order to avoid the accidents, hitherto, such safety measures have been taken as to demarcate a danger zone to keep persons away from the area of reach of the robot by, for example, setting up a fence.

These conventional safety measures, however, require additional spaces for safety zone and impairs the efficiency of various necessary works such as setting of the work, inspection and maintenance of the robot. In addition, these conventional measures are quite invalid in avoiding the danger when a person has accidentally stepped into the danger zone or when an obstacle is happened to be put in the same.

The US—A—4146924 discloses a system for visually determining positions in space and/or orientation in space. The object underlying this known robot system is to facilitate the instruction of programming of numerically-controlled industrial robots to enable such robots to perform new or additional tasks. Visual information or image data are provided during the teaching procedure to determine positions in space and/or orientation in space. Thereby, obstacles can be pointed out to the robot only during the teaching procedure, i.e. it is not possible to avoid unpredicted accidents.

Accordingly the object of the invention is to provide a safety system for industrial robots capable of eliminating occurrence of accident in all events without requiring the additional space for safety and without necessitating setting up of a fence, thereby to overcome the above-described problems of the prior art.

To achieve the above object according to the invention, in an industrial robot of play-back type which memorizes data for moving a position control object portion through teaching a safety system according to claim 1 comprises a plurality of photoelectric detection means having different detection areas within a predetermined zone containing at least a part of said robot and is characterized by memory means for storing the detection data delivered by said photoelectric detection means in each of the positions corresponding to successive steps in the teaching, and means for reading in each step of the play back operation the detection data of the corresponding step from said memory means and for comparing the thus read out detection data with the detection data obtained in the present step in the course of the play back operation, wherein the movement of said position control object portion of the robot to the position corresponding to the next step of play back operation is prohibited when the difference obtained through the comparison exceeds a predetermined level.

A safety system for industrial robots in which the position to be taken by a position control object portion of said robot are started which achieves the above object comprises according to the independent claim 2 a photoelectric detection means having a detection area covering the region of reach of said robot and is characterized by memory means adapted to store the data derived from said photoelectric detection means in each of positions corresponding to respective steps of said position control object portion; and means for reading, in each of the positions of said position control object portion during the operation of said robot in the automatic operation mode, the detection data from said memory means and for comparing the read out detection date with the detection data obtained in the present position through said photoelectric detection means; wherein the movement of said position control object portion to the operating position corresponding to the next step of operation is prohibited depending on the result of the comparison between these two kinds of detection data.

An advantageous development thereof is the subject-matter of the dependent claim 3.

Thus, in the safety system of the invention, the confirmation of safety, as well as the judgment as to whether to allow the manipulator to move to the next step, is made in each of the steps of playing back or automatic operation of the robot. It is, therefore, not necessary to demarcate wide danger zone nor to set up a fence. Accordingly, the invention provides a highly reliable safety system for industrial robots, capable of performing a sure and delicate operation to ensure the safety, thereby to overcome the problems of the prior art.

These and other objects and advantages of the invention will become clear from the following description of the invention taken in conjunction with the accompanying drawings.

Fig. 1 is a block diagram of an embodiment of the safety system for a robot in accordance with the present invention;

Fig. 2 is a perspective view showing an example of mounting of a TV camera on a robot;

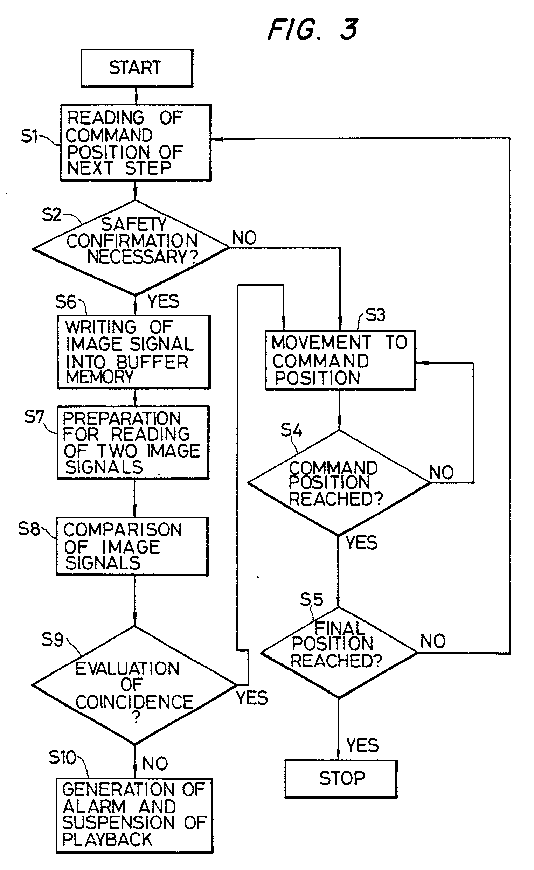

Fig. 3 is a flow chart of operation of the embodiment as shown in Figs. 1 and 2; and

Fig. 4 is a block diagram showing a different embodiment of the invention.

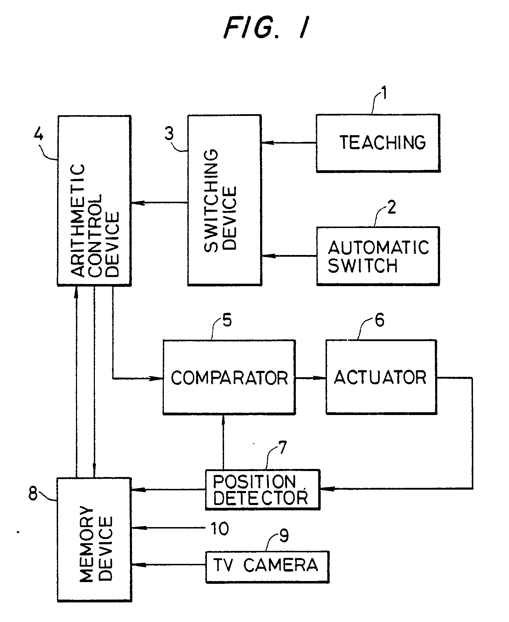

Fig. 1 shows the control system of a playback type robot, including a safety device in accordance with an embodiment of the invention. The control system includes a teaching device 1, automatic switch device 2 for playback control, an operation mode change-over switch 3, an operation controller (computer) 4, a comparator 5, an actuator 6 for driving manipulator, a position detector 7, a memory device 8, a TV camera 9 and an input device 10 for inputting answer-back signal from peripheral equipments.

As the teaching device 1 is operated, the operation mode is switched to the teaching mode by the switching device 3. In consequence, the operation controller 4 produces an operation signal in accordance with a control signal delivered by the teaching device in each step, and operates an actuator 6 through a comparator 5.

The position control object portion P of the robot R is actuated by an actuator 6, and the position of this portion P is detected by the position detector 7. The position detected by the position detector 7 is fed back to the comparator 5 so that the manipulator is brought to the predetermined command position. Meanwhile, the arithmetic operation controller 4 picks up, at each time of receipt of teaching completion signal from the teaching device 1 in each step, a signal from the position detector 7 and other various control signals necessary in the present step. These signals are stored in the predetermined memory area of the memory device 8. Simultaneously, the arithmetic operation controller 4 performs a control for writing in the memory device 8 so that different memory areas are appointed for different steps.

In consequence, the positions of the position control object portion P of the robot R in respective steps of movement of the robot and various control data associated therewith are stored in different memory areas, until the teaching device 4 completes the teaching in accordance with a predetermined sequence of operation.

After the completion of the teaching, the automatic switch device 2 produces a signal to operate the switching device 3 to switch the operation mode to the playback mode. Subsequently, a start signal is produced by the automatic switch device 2 so that the arithmetic operation control device 4 reads out the successive positions from corresponding memory areas in the memory device 8 starting from the first memory area. The actuator 6 is operated in response to the thus read out positions to successively control the position of the position control object portion P of the robot R to make the latter perform the necessary tasks.

The above-described operation of the playback type robot is well known.

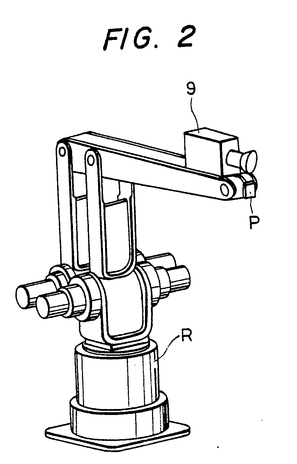

As shown in Fig. 2, a TV camera 9 is mounted on a portion in the vicinity of the position control object portion P of the robot R or a part of a manipulator (not shown) provided on the position control object portion P so that the field of vision of the TV camera 9 covers a predetermined area including the movable part of the manipulator, particularly the wrist thereof. Thus, the TV camera can take up the image of the movement of the manipulator together with the background or peripheral scenery, during teaching of the robot and during playing back operation of the same.

On the other hand, the memory device 8 is constructed to store a predetermined number of frames of image signals (video signals) taken up by the TV camera 9.

The arithmetic operation controller 4 picks up the image signal from the TV camera in the form of independent frame in each of the above-mentioned steps or in selected ones of the above-mentioned steps, and stores the image signals in predetermined memory areas within the memory device 8. This operation is performed simultaneously with the writing of the position signal derived from the position detector 7 and various control signals in the present step.

Then, as the operation mode is switched to the playback mode, the arithmetic operation controller 4 picks up the image signal in the form of independent frames from the TV camera 9 in each of the steps of the playback operation. The image signal thus picked up are then written in a buffer frame memory provided in one of the memory areas of the memory device 8. Then, the image signal of one frame written in the buffer memory and the image signal of one frame of the corresponding step in the teaching are read out in the form of independent of picture elements or in the form of groups of picture elements. Thus, these two image signals are compared with each other for each of picture elements or for groups of picture elements.

The arithmetic operation controller 4 allows the robot to take the next step of operation only when there is no substantial difference between these two image signals. However, when there is a difference in excess of a predetermined level of difference between the two image signals, the arithmetic operation controller 4 operates to prohibit the robot to move to the next step and initiates an alarming operation as required.

The above-described operation of the safety system during the playback operation will be more fully understood from the following description taken with specific reference to Fig. 2 showing the flow chart of the operation.

As the playback operation is commenced, the position data is read out from the memory device 8 in a step S1, and a judgement is made in the next step S2 as to whether the position for confirming the safety is reached. There are two types of safety confirmation. Namely, a first type in which the conformation is made in all of the positions or steps of operation of the robot manipulator and a second type in which the safety conformation is made only in selected steps of operation of manipulator. In the latter case, each control signal which is to be written in the memory device in each step of teaching contains a discrimination signal concerning the necessity of the safety confirmation, so that the pick up of the frame of image signal from the TV camera is omitted in the step which does not require the safety confirmation. Thus, in the playing back operation, the discrimination signal is examined in the step S2 of the flow chart to judge as to whether the present step of manipulator operation requires the safety confirmation. It will be understood that the step S2 of the flow chart can be dispensed with if the safety system is intended for making safety confirmation in all of the steps of the manipulator operation. In such a case, the operation proceeds from the step S1 directly to step S6.

If the result of the checking in the step S2 of the flow chart is "NO", i.e. when the present step of the manipulator operation requires no confirmation of safety, steps S3 and S4 are taken in which, as in the case of ordinary playback operation, an operation is made to attain a coincidence between the actual position of the manipulator and the position data read out from the memory device 8. This operation is repeated until a checking result "YES" is obtained in a checking step S5, i.e. until the manipulator reaches the final position of the present step in the playback operation.

If an affirmative answer "YES" is obtained in the step S2, i.e. when the present step of manipulator operation requires a safety confirmation, the process proceeds from the step S2 to the step S6 mentioned before. In the step S6, the frame of image signal presently available through the TV camera 9 is written in the buffer frame memory. Then, the process proceeds to a next step S7 in which a preparation is made for the reading out of the frame of image signals which was stored in the corresponding step in the course of the teaching and the frame of image signals written in the buffer frame memory. Furthermore, in this step S8 of the flow chart, two frames of image signals are compared with each other for each of picture elements or for each of groups of picture elements, the result of which is evaluated in the next step S9 of the flow chart. When the answer derived through the step S9 is "NO", i.e. when there is a difference greater than a predetermined level of difference exists between two frames of image signals, the process proceeds to the next step S10 in which an instruction is given to temporarily stop the playback operation and to activate a suitable alarming device as required.

The difference between the sight within the field of vision of the TV camera as obtained in each step in the teaching process and the sight within the TV camera 9 as obtained in each step in the course of the playback operation is caused when a person has happened to come into the area of reach of the manipulator or when an obstacle is accidentally put into the same. The difference is caused also when the work to be processed by the robot is set in a wrong manner. The difference in the sight is then automatically detected and the movement of the manipulator to the next step is stopped, so that the occurrence of the accident is avoided and prevented without fail.

When the playback operation is suspended by the safety device, a suitable alarming device is activated to inform the operator of the suspension of operation. Therefore, the operator can restart the playback operation by taking the necessary measure such as the removal of the obstacle.

Thus, in the described embodiment, it is possible to confirm the safety minutely and accurately because the safety conformation can be made for each of the steps of the manipulator operation during the playback operation, so that the safety system of the invention can enjoy a high reliability of operation for avoiding any danger.

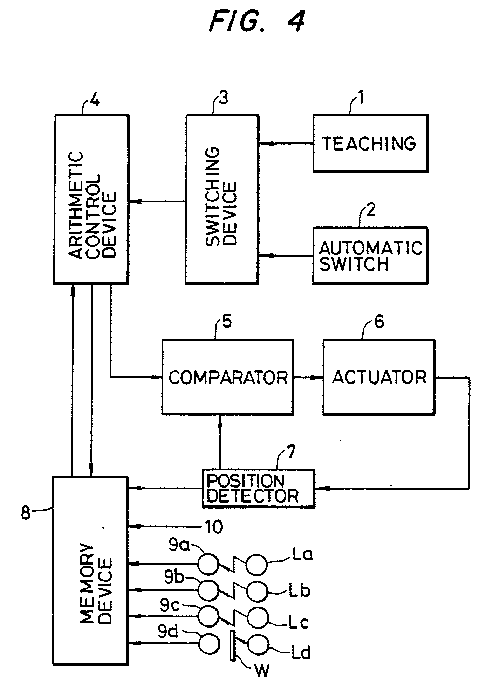

Although in the described embodiment the confirmation of safety is made through comparing frames of image signals obtained through the TV camera 9, this is not exclusive and the safety conformation can be made by other means than the TV camera, as in the case of another embodiment shown in Fig. 4.

Namely, in the arrangement shown in Fig. 4, at least two photoelectric detectors 9a to 9d covering different detection areas are provided to output sight informations, and the safety conformation is made by conducting a comparison between the signals obtained during the teaching through these photoelectric detectors 9a to 9d and those obtained in the course of the playback operation. Symbols La to Ld designate light-emitting elements. In Fig. 4, the light beams emitted from the light-emitting elements La to Lc are received by the corresponding photoelectric detectors 9a to 9c but the light beam from the light-emitting element Ld is interrupted by the work W and cannot reach the corresponding photoelectric detectors 9d.

In this robot, the danger zone, i.e. the reach of the manipulator is changed in accordance with the movement of the manipulator. Therefore, by mounting a TV camera or photoelectric detectors on the movable part of the manipulator so that the detection of any obstacle in the danger zone is made regardless of the change in the danger zone in accordance with the motion of the manipulator. Thus, the safety confirmation is made for the danger zone peculiar to each step of operation of the manipulator.

Therefore, the manipulator is not stopped solely for the reason such as an approach of a person to the robot manipulator but the operation of the manipulator is suspended only when any accident is expected in the next step of operation of the manipulator. It is, therefore, possible to attain a high reliability of operation of the industrial robot.

Although not mentioned specifically, an important factor in the operation of the safety system is the selection of the threshold level of judgement between accordance and discordance of two independent image signals. It is, therefore, desirable that the threshold level is adjustable so that the safety confirmation can be made with the optimum sensitivity.

It is also possible to compare the two kinds of the image signals in the form of binary codes to permit the judgement of the accordance or discordance by a pattern recognition technic.

The technic for the binary coding of the image signals is detailed in U.S.P. No. 4,136,957 and no further explanation seems to be needed in this connection.

Although the invention has been described through specific terms, the described embodiments are not exclusive and various changes and modifications may be imparted thereto without departing from the scope of the invention which is limited solely by the appended claims.

## Claims

1. In an industrial robot of playback type which memorizes data for moving a position control object portion through teaching, a safety system comprises:
a plurality of photoelectric detecting means (9; 9a—9d) having different detection areas within a predetermined zone containing at least a part of said robot; characterized by
memory means (8) for storing the detection data delivered by said photoelectric detection means (9; 9a—9d) in each of the positions corresponding to successive steps in the teaching;
and means (3, 4, 5) for reading, in each step of the playback operation, the detection data of the corresponding step from said memory means and for comparing the thus read out detection data with the detection data obtained in the current step in the course of the playback operation; wherein the movement of said position control object portion of the robot to the position corresponding to the next step of playback operation is prohibited when the difference obtained through the comparison exceeds a predetermined level.

2. A safety system for industrial robots in which the positions to be taken by a position control object portion of said robot are stored, said safety system comprising:
a photoelectric detection means (9) having a detection area covering the region of reach of said robot; characterized by
memory means (8) adapted to store the data derived from said photoelectric detection means in each of positions corresponding to respective steps of said position control object portion;
and means (3, 4, 5) for reading, in each of the positions of said position control object portion during the operation of said robot in the automatic operation mode, the detection data from said memory means and for comparing the read out detection data with the detection data obtained in the present position through said photoelectric detection means (9); wherein the movement of said position control object portion to the operating position corresponding to the next step of operation is prohibited depending on the result of the comparison between these two kinds of detection data.

3. A safety system for industrial robot according to claim 1 or 2,
wherein said photoelectric detection means (9) include a TV camera mounted on the arm (P) of said robot.

## Patentansprüche

1. Sicherheitssystem für Industrieroboter vom Playbacktyp, die Daten für die Bewegung eines Lagesteuer-Objektteils durch einen Lehrvorgang speichern, mit mehreren photoelektrischen Erfassungsorganen (9; 9a—9d) mit verschiedenen Detektionsflächen innerhalb eines vorbestimmten Bereichs, der mindestens einen Teil des Roboters umfaßt, gekennzeichnet durch
einen Speicher (8) zum Abspeichern der Erfassungsdaten, von den photoelektrischen Erfassungsorganen (9; 9a—9d) in den jeweiligen Stellungen, die aufeinanderfolgenden Lehrschritten entsprechen;
und eine Einrichtung (3, 4, 5) zum Lesen der Erfassungsdaten des entsprechenden Schritts aus dem Speicher während jedes Schritts der Playbackoperation und zum Vergleichen der so ausgelesenen Erfassungsdaten mit den Daten, die im laufenden Playbackschritt erhalten werden, wobei die Bewegung des Lagesteuer-Objektteils des Roboters zu einer Position, die dem nächsten Schritt der Playbackoperation entspricht, verhindert wird, wenn die durch Vergleich erhaltene Differenz einen vorbestimmten Pegel übersteigt.

2. Sicherheitssystem für Industrieroboter, in dem Daten über die Position, die ein Lagesteuer-Objektteil des Roboters einnimmt, gespeichert sind, mit:
einer photoelektrischen Erfassungseinrichtung (9) mit einer Detektorfläche, die die Reichweite des Roboters abdeckt, gekennzeichnet durch
einen Speicher (8), der die von dem photoelektrischen Detektor in der jeweiligen Position gelieferten Daten speichert, die den jeweiligen Schritten des Lagesteuer-Objektteils entsprechen;
und eine Einrichtung (3, 4, 5) zum Lesen der Detektionsdaten aus dem Speicher in jeder Position des Lagesteuer-Objektteils während des Betriebs des Roboters in einer automatischen Betriebsart und zum Vergleichen der ausgelesenen Detektionsdaten mit den in der laufenden Position mit der photoelektrischen Erfassungseinrichtung (9) erhaltenen Positionsdaten, wobei die Bewegung des Lagesteuer-Objektbereiches zur entsprechenden Arbeitsposition, die dem nächsten Operationsschritt entspricht, in Abhängigkeit vom Ergebnis des Vergleiches zwischen den beiden arten von Erfassungsdaten verhindert wird.

3. Sicherheitssystem für Industrieroboter nach Anspruch 1 oder 2, in dem die photoelektrische Erfassungseinrichtung (9) eine TV-Kamera aufweist, die auf dem Arm (P) des Roboters angebracht ist.

**Revendications**

1. Système de sécurité pour robots industriels du type play-back mémorisant par un procès d'apprentissage des données concernant le déplacement d'un élément d'un objet dont la position doit être contrôlée comprenant plusieurs détecteurs photoélectriques (9; 9a—9d) ayant plusieurs surfaces détectrices dans une zone prédéterminée qui comprend au moins une partie du robot, caractérisé par

une mémoire (8) pour mémoriser les données de mesure des détecteurs photoélectriques (9; 9a—9d) dans des positions correspondant respectivement à des pas d'apprentissage successifs, et par

un dispositif (3, 4, 5) de lecture des données de mesure de chaque pas hors de la mémoire et pendant chaque pas de l'opération play back et pour comparer les données de mesure ainsi extraites de la mémoire avec les données obtenues pendant le pas de l'opération play back courant, le déplacement de l'élément du robot de l'objet dont la position doit être contrôlée, à une position qui correspond à une position du prochain pas de l'opération play back étant évité si la différence obtenue par comparaison dépasse un seuil prédéterminé.

2. Système de sécurité pour robots industriels dans lequel sont mémorisées des données concernant la position occupée par un élément d'un objet dont la position doit être contrôlée, comprenant:

un détecteur photoélectrique ayant une surface détéctrice couvrant la portée du robot caractérisé par

une mémoire (8) pour mémoriser les données délivrées par le détecteur photoélectrique, les données correspondant à des pas d'élément d'objet dont la position doit être contrôlée; et par

un dispositif (3, 4, 5) de lecture de données de mesure de la mémoire dans chaque position de l'élément d'objet dont la position doit être contrôlée pendant le fonctionnement du robot dans un mode automatique et pour comparer les données de mesure extraites de la mémoire avec les données de position actuelles obtenues par le détecteur photoélectrique (9), le déplacement de l'élément d'objet dont la position doit être contrôlée vers une position de travail correspondant au prochain pas d'opération étant évité en fonction du résultat de la comparaison des deux modes de données de mesure.

3. Système de sécurité pour robots industriels suivant la revendication 1 ou 2, dans lequel le dispositif de détection photoélectrique (9) comprend une caméra de télévision, qui est montée sur le bras (P) du robot.

0 096 830

# FIG. 1

# FIG. 2

## FIG. 3

```
                              START

            READING OF
        S1  COMMAND
            POSITION OF
            NEXT STEP

        S2      SAFETY
            CONFIRMATION        NO
            NECESSARY?

                YES

        S6  WRITING OF                   S3
            IMAGE SIGNAL        MOVEMENT TO
            INTO BUFFER         COMMAND
            MEMORY              POSITION

        S7  PREPARATION
            FOR READING         S4
            OF TWO IMAGE            COMMAND
            SIGNALS             POSITION        NO
                                REACHED?

        S8  COMPARISON
            OF IMAGE                YES
            SIGNALS

                                S5
        S9      EVALUATION          FINAL
                OF              POSITION        NO
            COINCIDENCE         REACHED?
                ?       YES

                NO              YES

        S10 GENERATION OF       STOP
            ALARM AND
            SUSPENSION OF
            PLAYBACK
```

3

0 096 830

## FIG. 4

4